# EUROPÄISCHE PATENTSCHRIFT

(11) **EP 1 881 887 B1**
(45) Veröffentlichungstag und Bekanntmachung des Hinweises auf die Patenterteilung: **09.03.2011**
(21) Anmeldenummer: 06721254.8
(22) Anmeldetag: 16.05.2006
(51) Int. Cl.: B29B 9/06, B01J 2/20, H02K 7/12

(54) **VORRICHTUNG ZUM GRANULIEREN**
GRANULATING DEVICE
GRANULATEUR

(30) Priorität: 18.05.2005 AT 8492005
(43) Veröffentlichungstag der Anmeldung: 30.01.2008
(73) Patentinhaber: EREMA Engineering Recycling Maschinen und Anlagen Gesellschaft m.b.H., 4052 Ansfelden-Linz (AT)
(72) Erfinder: SCHULZ, Helmuth, A-4020 Linz (AT)
(74) Vertreter: Wildhack & Jellinek
(86) Internationale Anmeldenummer: PCT/AT2006/000202
(87) Internationale Veröffentlichungsnummer: WO 2006/122340

(56) Entgegenhaltungen:
- WO-A-01/94088
- DE-A1- 2 825 639
- DE-A1- 10 302 645
- DE-A1- 19 515 473
- SU-A1- 1 323 401

## Beschreibung

Die Erfindung bezieht sich auf eine Vorrichtung zum Granulieren von aus zumindest einer Düse ausgepresstem Material, insbesondere thermoplastischem Kunststoffmaterial, mit einer die Düse(n) aufweisenden Lochplatte, der ein zumindest ein Messer tragender Messerkopf gegenüber liegt, der an einer Welle befestigt ist, die von einem Motor zur Drehbewegung angetrieben wird und in ihrer Achsrichtung verstellbar ist, sodass jedes Messer in Anlage an der Düsenmündung vorbeiläuft und dabei die Granulatkörner abschlägt, die von einem in ein die Lochplatte umgebendes Granuliergehäuse eingeleiteten Kühlmedium aus dem Granuliergehäuse abgeleitet werden, wobei der Motor mittels einer Aufhängung relativ zum Granuliergehäuse beweglich aufgehängt ist, welche Beweglichkeit jedoch nur in Achsrichtung der Welle gegeben ist, und wobei eine Verstelleinrichtung für die axiale Verstellung des Motors in Bezug auf die Lochplatte vorhanden ist. Dokument WO-A-01/94088 offenbart eine solche Vorrichtung gemäß dem Oberbegriff des Anspruchs 1.

Granuliervorrichtungen, bei welchen die Welle in Achsrichtung verstellbar ist, sind in vielen Ausführungen bekannt. Häufig ist die Welle des Messerkopfes in einer Pinole gelagert, welche axial verschiebbar ist. Dadurch kann stets der gewünschte Anpressdruck der Messer an der Lochplatte eingestellt werden. Auf die Messerwelle wird das Drehmoment zumeist über eine Zahnkupplung übertragen. Wenn als Kühlmedium für die abgeschlagenen Granulatkörnchen Wasser verwendet wird, was zumeist der Fall ist, muss die Messerwelle gegenüber dem Gehäuse abgedichtet werden. Hierbei ergeben sich reibungsbedingte Schwierigkeiten. Die axiale Verschiebung der Messerwelle bedingt auch eine Verschiebung der Lauffläche des Dichtringes, welcher die Wasserabdichtung bewirkt, so dass sich die Reibungsverhältnisse laufend ändern. In ähnlicher Weise ändern sich auch die Reibungswerte der Zahnkupplung bei Verschiebung der Messerwelle. Weiters ist zu beachten, dass die die Lagerung bildende Pinole in einem Gleitlager läuft, welches geschmiert werden muss. Auch hier kommt es zu zeitlich unterschiedlichen Reibungswerten, da das Schmiermittel (zumeist Öl) nach einiger Zeit mehr oder weniger verharzt, so dass ein relativ hohes Losbrechmoment entsteht, welches der Forderung entgegensteht, dass in der Regel nur eine geringfügige axiale Reibung gewünscht ist. Darüberhinaus bedingt eine Pinolenlagerung einen gewissen Aufwand.

Da die Messerwelle im Motor stets eine Lagerung bedingt, wurde bereits vorgeschlagen, die Pinolenlagerung durch die Motorlagerung zu ersetzen. Diese Konstruktionsvariante beseitigt jedoch nicht die eingangs erwähnten Schwierigkeiten.

Aus einer Granuliervorrichtung der eingangs beschriebenen Art (DE 10302645 A1) ist es bekannt geworden, die relativ zum Granuliergehäuse bewegliche Aufhängung des Motors und damit der Motorwelle von einer sich in Achsrichtung der Motorwelle erstreckenden Stangenführung zu bilden. Auch eine solche Konstruktion vermeidet nicht die erwähnten Schwierigkeiten unkontrollierbarer Reibungsverhältnisse.

Die Erfindung setzt sich zur Aufgabe, die genannten Schwierigkeiten zu vermeiden und eine Vorrichtung der eingangs geschilderten Art so zu verbessern, dass die Verschiebung der Messerwelle in axialer Richtung sich nicht oder nur unwesentlich in einer Änderung der Reibungsverhältnisse niederschlägt. Die Erfindung löst diese Aufgabe dadurch, dass für die Aufhängung des Motors am Granuliergehäuse zumindest eine Membran verwendet ist. Wie bei der zuletzt erwähnten bekannten Vorrichtung, macht auch bei der erfindungsgemäßen Granuliervorrichtung der Motor die axiale Verstellung der Messerwelle mit, so dass keine Relativverschiebung zwischen Messerwelle und Motor auftritt und die Schwierigkeiten entfallen, die auf eine Relativverschiebung zwischen Messerwelle und Motor zurückzuführen sind. Da die Aufhängung des Motors nur dessen axiale Verschiebung zulässt, radiale Verlagerungen jedoch vermeidet oder nur in sehr geringem Maß zulässt, werden die Radiallagen der Messer in Bezug auf die Düsenmündungen und somit die Abschlagwirkung der Messer nicht beeinträchtigt. Darüber hinaus sichert aber die erfindungsgemäße Verwendung zumindest einer Membran in Vergleich mit der zuletzt beschriebenen bekannten Konstruktion den Vorteil, dass unkontrollierte Reibungsverhältnisse, wie sie bei einer Stangenführung unvermeidlich sind, mit Sicherheit vermieden sind. Weiters besteht bei der erfindungsgemäßen Konstruktion der Vorteil, dass die Membranen auch für andere Zwecke eingesetzt werden können. Schließlich hat die erfindungsgemäße Konstruktion auch den Vorteil, dass der Motor im Granuliergehäuse selbst angeordnet werden kann, wogegen bei der zuletzt beschriebenen bekannten Konstruktion für den Motor ein eigenes Gehäuse mit der Stangenführung vorhanden ist, welches gegenüber dem eigentlichen Granuliergehäuse durch eine Wellendichtung in Bezug auf das Kühlmedium abgedichtet ist. Eine solche Abdichtungswirkung wird im Rahmen der Erfindung durch eine Membran erzielt, die am der Lochplatte zugewendeten Stirnende des Motors vorgesehen ist, gegebenenfalls auch am gegenüberliegenden Stirnende des Motors. An letzterem Stirnende können als Alternative zu Membranen auch Federn, nämlich Blattfedern, in Betracht gezogen werden. Für das der Lochplatte zugewendete Stirnende des Motors kommen Federn wohl nur dann in Betracht, wenn als Kühlmedium nicht Wasser, sondern Luft verwendet wird, es sei denn, es wird für eine gesonderte Abdichtung des Granuliergehäuses und für eine entsprechende Abschirmung des Motors in Bezug auf Kühlwasser gesorgt, was jedoch Abstriche bei dem durch die Erfindung erzielten Vorteil hinsichtlich des Aufwandes bedeutet. Die Einsparung an konstruktivem Aufwand ergibt sich gegenüber der zuletzt bekannten Konstruktion durch den Wegfall der Stangenführung und des gesonderten Gehäuses. Weiters ersetzt die erfindungsgemäße Konstruktion die vergleichsweise komplizierte dichte Radial- und Axiallagerung der Messerwelle am Gehäuse durch eine einfache Radiallagerung der Messerwelle an der Membran, welche Membran zugleich dazu verwendet werden kann, das Granuliergehäuse in Bezug auf das Kühlmedium dicht abzuschließen.

Besonders geeignet sind im Rahmen der Erfindung geschichtete Membranen, da diese eine hohe Steifigkeit in radialer Richtung haben. Als Materialien für die Membranen eignen sich insbesondere durch Einlagen verstärkte Kunststoffe, z.B. copolymeres Polyoxymethylen, Polybutylenterephthalat, Polytetrafluorethylen und Polyphenylenäther, insbesondere durch Glasfasern verstärkte solche Kunststoffe. Für Polytetrafluorethylen ist ein Glasfaseranteil von etwa 25 % ausreichend, für die anderen erwähnten Kunststoffarten sind Glasfaseranteile von etwa 30 % günstiger.

In der Regel sind die im Sinne der Erfindung zur Verwendung kommenden Membranen auch als Abstützung für das von der Welle ausgeübte Drehmoment ausreichend. Notfalls kann eine zusätzliche Abstützung durch einen Anschlag gebildet sein.

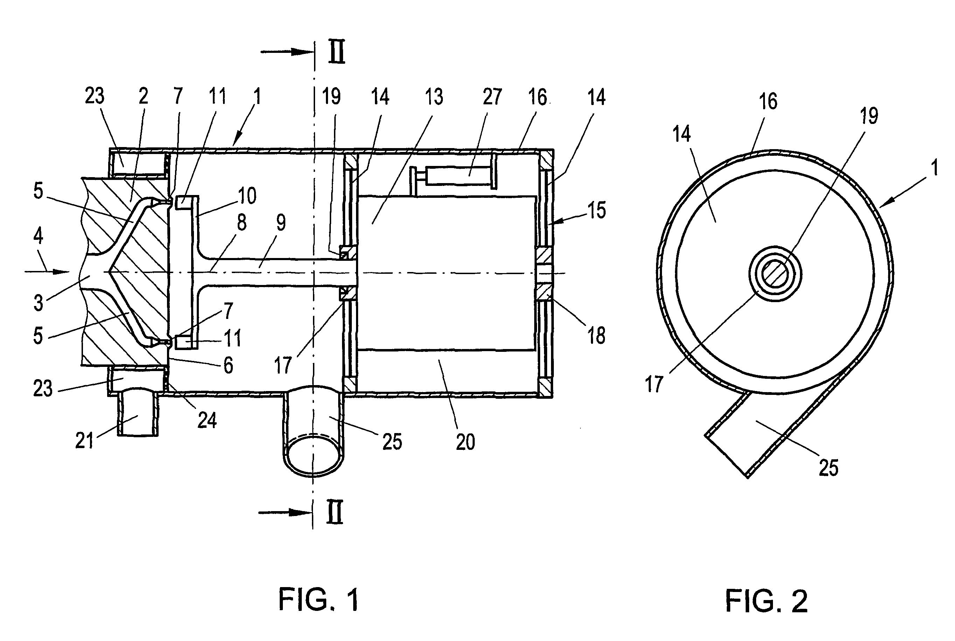

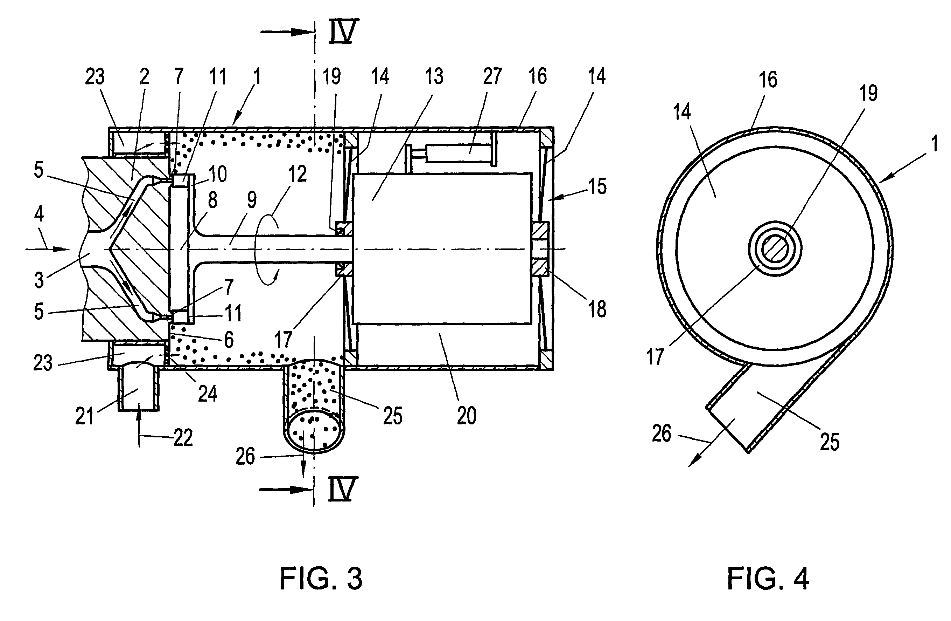

Weitere Kennzeichen und Vorteile der Erfindung ergeben sich aus der Beschreibung eines Ausführungsbeispiels, welches in zwei unterschiedlichen Funktionsstellungen in der Zeichnung schematisch dargestellt ist. Fig. 1 zeigt die Vorrichtung im Ruhezustand und im Axialschnitt, wobei Fig. 2 ein Schnitt nach der Linie II bis II der Fig. 1 ist. Fig. 3 zeigt die Vorrichtung in einem Schnitt ähnlich Fig. 1, jedoch im Betriebszustand, wobei Fig. 4 ein Schnitt nach der Linie IV bis IV der Fig. 3 ist.

Die Vorrichtung hat ein zylindrisches Granuliergehäuse 1, das an seinem einen Stirnende durch eine Lochplatte 2 dicht abgeschlossen ist. In der Lochplatte ist ein Zufuhrkanal 3 für das zu granulierende plastifizierte Material, insbesondere thermoplastischen Kunststoff, vorgesehen, der in Richtung des Pfeiles 4 aus dem Zufuhrkanal 3 in mehrere Verteilerkanäle 5 strömt, die an der Stirnfläche 6 der Lochplatte 2 in Düsen 7 münden, die im Kreis und in gleichmäßigen Abständen rund um die zentrale Längsachse 8 des Granuliergehäuses 1 angeordnet sind. Diese Achse 8 bildet zugleich die Drehachse einer Welle 9, die an ihrem der Lochplatte 2 zugewendeten Ende einen Messerkopf 10 trägt, welcher mit mehreren Messern 11 bestückt ist, die bei der Drehung der Welle 9 in Richtung des Pfeiles 12 (Fig. 3) über die Mündungen der Düsen 7 streichen und dadurch die aus den Düsen 7 ausgepresste Kunststoffmasse in Granulatkörnchen abschlagen. Die Drehung der Welle 9 bewirkt ein Motor 13, der an seinen beiden Stirnenden mittels einer von zwei Membranen 14 gebildeten Aufhängung 15 an der zylindrischen Wand 16 des Granuliergehäuses 1 so aufgehängt ist, dass der Motor 13 und damit die in ihm gelagerte Welle 9 wohl in Richtung der Achse 8 verstellbar ist, jedoch nicht oder nicht wesentlich in radialer Richtung dazu. Die günstigste Aufhängung ergibt sich dann, wenn die Aufhängung an zwei Stellen am Motor 13 angreift, die - gemessen in Richtung der Achse 8 - möglichst weit auseinanderliegen. In einfacher Weise ist dies dadurch erfüllt, dass die beiden Membranen 14 an den beiden Stirnenden des Motors 13 angeordnet sind. Die beiden Membranen 14 sind an ihrem Außenumfang an der Wand 16 und in ihrem zentralen Bereich an mit dem Motorgehäuse verbundenen Flanschen 17, 18 eingespannt, die an den beiden Stirnenden des Motorgehäuses angeordnet sind. Der der Lochplatte 2 näher liegende Flansch 17 dient zugleich zur Aufnahme einer Wellenabdichtung 19, die in Bezug auf das in das Granuliergehäuse 1 eingeleitete Kühlwasser dicht ist. Ebenso dicht ist die Befestigung des äußeren Randes der lochplattenseitigen Membran 14 am Granuliergehäuse 1. Der zwischen den beiden Membranen 14 liegende, den Motor 13 aufnehmende Raum 20 ist somit gegen das in das Granuliergehäuse 1 eingeleitete Kühlmittel, insbesondere Kühlwasser, abgedichtet. Dieses Kühlwasser wird über eine Leitung 21 in Richtung des Pfeiles 22 (Fig. 3) zugeführt und strömt in einen die Lochplatte 2 umgebenden Ringraum 23, aus welchem es durch eine Vielzahl von Öffnungen 24 in das Innere des Granuliergehäuses 1 eintritt, in Form eines Wasserfilmes an der Innenseite der Wand 16 entlang streicht und dabei die von den Messern 11 abgeschlagenen Granulatkörner unmittelbar nach ihrer Entstehung abkühlt, sodass ein Zusammenbacken dieser Körner verhindert wird. Die abgekühlten Granulatteilchen werden zusammen mit dem Kühlwasser über eine Auslassleitung 25 in Richtung des Pfeiles 26 aus dem Granuliergehäuse 1 abgeleitet.

Um sicher zu stellen, dass die Messer 11 stets mit dem gewünschten Anpressdruck über die Mündungen der Düsen 7 streichen, ist die Welle 9 samt dem sie antreibenden Motor 13 in Richtung der Achse 8 verstellbar. Hierfür dient eine Verstelleinrichtung 27, die von einem Stellglied beliebiger Art gebildet sein kann, z.B. über Gewinde, einen Magnet, mittels Stellmotor usw. Die Verstelleinrichtung ist am Granuliergehäuse 1 befestigt und greift am Gehäuse des Motors 13 an. Vorteilhaft ist hierbei, dass keine Beeinflussung durch Reibungswerte entsteht. Die Biegekraft für die beiden Membranen 14 ist ermittelbar bzw. berechenbar und verändert sich in keiner Weise, da sie zeitlich stets gleich bleibt. Ein weiterer Vorteil liegt in einer Reduktion der Bauteilkosten im Vergleich zu bekannten Konstruktionen und weiters darin, dass die Wellenabdichtung 19 sich relativ zur Welle 9 nicht verschiebt, so dass die dort auftretenden Reibungsverhältnisse zeitlich wesentlich konstanter bleiben. Ferner entfällt die bei bekannten Konstruktionen nötige Übertragung des Drehmomentes über eine axial verschiebbare Zahnkupplung, so dass das an der Welle auftretende, zur Granulatabschlagung erforderliche Drehmoment unverfälscht als Messgröße herangezogen werden kann. Hierfür geeignete Vorrichtungen sind bekannt.

Ein weiterer Vorteil der erfindungsgemäßen Bauweise ist, dass ein positives Verschleißverhalten der Messer 11 erzielt wird, da Vibrationen der die Messer 11 tragenden Bauteile vermieden sind.

Geeignete Materialien für die Membranen sind bekannt, z.B. Folien aus Metall oder Kunststoff. Besonders geeignet sind Membranen mit geschichteter Bauweise, was bei hoher radialer Steifheit eine axial höhere Biegefähigkeit ergibt.

Bei der in Fig. 1 dargestellten Ruhestellung der Vorrichtung sind die beiden Membranen 14 entspannt, sie liegen also jeweils in einer Ebene. In der in Fig. 3 dargestellten Funktionsstellung werden jedoch mittels der Verstelleinrichtung 27 der Motor 13 und damit über die Welle 9 die Granuliermesser 11 an die Lochplatte 2 angedrückt, und zwar mit dem jeweils gewünschten Anpressdruck, was durch entsprechende Steuerung der Verstelleinrichtung 27, etwa über die schon erwähnte Drehmomentabfühlung (Leistungsaufnahme des Motors 13) in einfacher Weise durchführbar ist.

Wie ersichtlich, ist die Erfindung sowohl auf Unterwassergranuliervorrichtungen als auch auf Heißabschlaggranuliervorrichtungen anwendbar. Das Granuliergehäuse 1 kann mit Wasser gefüllt sein oder, wie in der Zeichnung dargestellt, es kann der Abtransport der Granulatkörnchen durch einen Wasserfilm erfolgen. Selbstverständlich kann als Kühl- oder Transportmedium statt Wasser auch Luft, insbesondere gekühlte Luft, angewendet werden. Die Verwendung von Blattfedern für die Motoraufhängung anstelle einer Membran an der Rückwand des Granuliergehäuses 1 ist möglich, was den Vorteil einer Verbesserung der Kühlung des Motors 13 hat.

## Patentansprüche

1. Vorrichtung zum Granulieren von aus zumindest einer Düse (7) ausgepresstem Material, insbesondere thermoplastischen Kunststoffmaterial, mit einer die Düse(n) (7) aufweisenden Lochplatte (2), der ein zumindest ein Messer (11) tragender Messerkopf (10) gegenüberliegt, der an einer Welle (9) befestigt ist, die von einem Motor (13) zur Drehbewegung angetrieben wird und in ihrer Achsrichtung verstellbar ist, so dass jedes Messer (11) in Anlage an der Düsenmündung vorbeiläuft und dabei die Granulatkörnchen abschlägt, die von einem in ein die Lochplatte (2) umgebendes Granuliergehäuse (1) eingeleiteten Kühlmedium aus dem Granuliergehäuse (1) abgeleitet werden, wobei der Motor (13) mittels einer Aufhängung (15) relativ zum Granuliergehäuse (1) beweglich aufgehängt ist, welche Beweglichkeit jedoch nur in Achsrichtung der Welle (9) gegeben ist, und wobei eine Verstelleinrichtung (27) für die axiale Verstellung des Motors (13) in Bezug auf die Lochplatte (2) vorhanden ist, **dadurch gekennzeichnet, dass** für die Aufhängung des Motors (13) am Granuliergehäuse (1) zumindest eine Membran (14) verwendet ist.

2. Vorrichtung nach Anspruch 1, **dadurch gekennzeichnet, dass** eine Membran (14) das Granuliergehäuse (1) in Bezug auf das Kühlmedium dicht abschließt.

3. Vorrichtung nach den Ansprüchen 1 und 2, **dadurch gekennzeichnet, dass** eine Membran (14) den Motor (13) gegenüber dem Granuliergehäuse (1) in Bezug auf das Kühlmedium dicht abschließt.

4. Vorrichtung nach einem der Ansprüche 1 bis 3, **dadurch gekennzeichnet, dass** eine Membran (14) an dem der Lochplatte (2) zugewendeten Stirnende des Motors (13) vorgesehen ist, gegebenenfalls auch am gegenüberliegenden Stirnende des Motors (13).

5. Vorrichtung nach Anspruch 4, **dadurch gekennzeichnet, dass** die Membrane (14) an einem eine Wellenabdichtung (19) des Motors (13) aufweisenden Flansch (17) des Motorgehäuses befestigt ist.

6. Vorrichtung nach einem der Ansprüche 1 bis 5, **dadurch gekennzeichnet, dass** die Verstelleinrichtung (27) für die axiale Verstellung des Motors (13) in Bezug auf die Lochplatte (2) am Granuliergehäuse (1) befestigt ist und am Motor (13) im Raum (20) zwischen zwei Membranen (14) angreift.

7. Vorrichtung nach einem der Ansprüche 1 bis 6, **dadurch gekennzeichnet, dass** die Membran (14) geschichtet ist.

8. Vorrichtung nach einem der Ansprüche 1 bis 7, **dadurch gekennzeichnet, dass** die Membran (14) aus durch Einlagen verstärktem Kunststoff, z.B. glasfaserverstärktem Kunststoff, besteht.

## Claims

1. A device for granulating a material, especially a thermoplastic plastic material, which is extruded from at least one die (7) with a hole plate (2) on which said die(s) (7) is/are provided and to which a knife head (10) bearing at least one knife (11) is opposed, said knife head (10) being mounted on a shaft (9) whose rotational movement is driven by a motor (13) and which is displaceable in its axial direction, so that each knife (11) fits the die orifice closely when passing it and, thus, cuts off the granules which are transported out of the granulation housing (1) surrounding said hole plate (2) by a cooling medium introduced into said granulation housing (1), said motor (13) being suspended to be movable in relation to said granulation housing (1) only in the axial direction of said shaft (9) by means of a suspension (15) and an adjustment means (27) for the axial adjustment of said motor (13) in relation to said hole plate (2) being provided, **characterized in that** at least one diaphragm (14) is used for the suspension of said motor (13) from said granulation housing (1).

2. The device according to claim 1, **characterized in that** a diaphragm (14) seals off the granulation housing (1) tightly in relation to the cooling medium.

3. The device according to claim 1 and claim 2, **characterized in that** a diaphragm (14) seals off the motor (13) tightly against the granulation housing (1) in relation to the cooling medium.

4. The device according to any one of the claims 1 to 3, **characterized in that** a diaphragm (14) is provided at the end face of the motor (13) facing the hole plate (2), optionally also at the opposite end face of the motor (13).

5. The device according to claim 4, **characterized in that** the diaphragm (14) is fixed to a flange (17) of the motor housing, said flange having a shaft sealing (19) of the motor (13).

6. The device according to any one of the claims 1 to 5, **characterized in that** the adjustment means (27) for the axial adjustment of the motor (13) in relation to the hole plate (2) is mounted to the granulation housing (1) and engages with the motor (13) in the space (20) between two diaphragms (14).

7. The device according to any one of the claims 1 to 6, **characterized in that** said diaphragm (14) is layered.

8. The device according to any one of the claims 1 to 7, **characterized in that** said diaphragm (14) is made of plastic reinforced by inserts, such as plastic reinforced by glass fibers.

## Revendications

1. Dispositif pour granuler une matière, notamment une matière plastique thermoplastique, extrudée d'au moins une filière (7), avec un panneau à trous (2) supportant ladite filière/lesdites filières (7), un tête de lames (10) avec au moins une lame (11) étant disposé en face dudit panneau et étant fixé à un arbre (9), le mouvement de rotation duquel est actionné par un moteur (13) et l'orientation axiale duquel est ajustable ainsi que chaque lame (11) passe l'orifice de ladite filière/desdites filières (7) en s'y appuyant et ainsi découpe les granulés qui sont évacués d'un boîtier de granulation (1) autour dudit panneau à trous (2) par un fluide réfrigérant introduit dans ledit boîtier de granulation (1), ledit moteur (13) étant suspendu par rapport audit boîtier de granulation (1) à l'aide d'une suspension (15) d'une manière qu'il n'est mobile que dans la direction de l'axe dudit arbre (9), une installation d'ajustement (27) pour l'ajustement axial du moteur (13) par rapport audit panneau à trous (2) étant fournie, **caractérisé en ce qu'**au moins un diaphragme (14) est utilisé pour suspendre le moteur (13) au boîtier de granulation (1).

2. Dispositif selon la revendication 1, **caractérisé en ce qu'**un diaphragme (14) ferme le boîtier de granulation (1) de manière étanche par rapport au fluide réfrigérant.

3. Dispositif selon les revendications 1 et 2, **caractérisé en ce qu'**un diaphragme (14) ferme le moteur (13) de manière étanche vis-à-vis le boîtier de granulation (1) par rapport au fluide réfrigérant.

4. Dispositif selon l'une des revendications 1 à 3, **caractérisé en ce qu'**un diaphragme (14) est fourni à la surface terminale du moteur (13) orientée vers le panneau à trous (2), éventuellement aussi à la surface terminale opposée du moteur (13).

5. Dispositif selon la revendication 4, **caractérisé en ce que** le diaphragme (14) est fixé à une flasque (17) du boîtier du moteur portant une garniture étanche de l'arbre (19) du moteur (13).

6. Dispositif selon l'une des revendications 1 à 5, **caractérisé en ce que** l'installation d'ajustement (27) pour l'ajustement axial du moteur (13) par rapport au panneau à trous (2) est fixée au boîtier de granulation (1) et prend le moteur (13) dans l'espace (20) entre les deux diaphragmes (14).

7. Dispositif selon l'une des revendications 1 à 6, **caractérisé en ce que** le diaphragme (14) est stratifié.

8. Dispositif selon l'une des revendications 1 à 7, **caractérisé en ce que** le diaphragme (14) consiste en une matière plastique renforcée par des intercalations, par exemple un matière plastique renforcée par des fibres de verre.
